# EUROPEAN PATENT SPECIFICATION

(11) **EP 0 810 318 B1**
(45) Date of publication and mention of the grant of the patent: **10.04.2002**
(21) Application number: 97303714.6
(22) Date of filing: 30.05.1997
(51) Int. Cl.: D06F 37/22

(54) **Washing machine**
Waschmaschine
Machine à laver

(30) Priority: 30.05.1996 KR 9613848; 30.05.1996 KR 9613849; 30.05.1996 KR 9613853
(43) Date of publication of application: 03.12.1997
(73) Proprietor: SAMSUNG ELECTRONICS CO., LTD., Suwon-City, Kyungki-do (KR)
(72) Inventor: Kim, Jin-Soo, Suwon City, Kyungki-Do (KR)
(74) Representative: Read, Matthew Charles

(56) References cited:
- EP-A- 0 607 678
- DE-U- 1 912 481
- FR-A- 1 213 067
- FR-A- 2 393 097

## Description

The present invention generally relates to a washing machine with a counterbalanced drum.

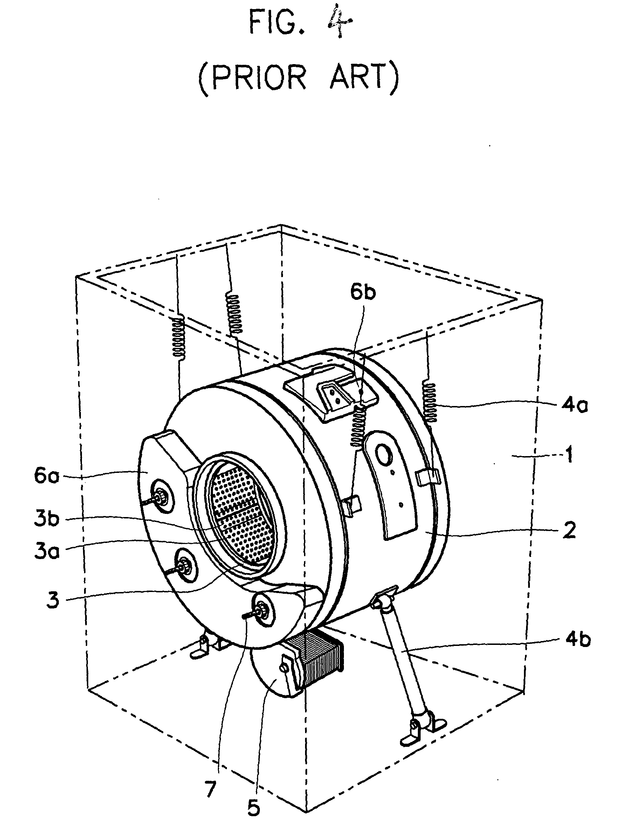

A conventional drum washing machine is illustrated in Figure 4 and is an appliance in which clothes are washed using suds generated as a result of rotation of its drum-type spin basket. Washing, rinsing and spin drying tasks are automatically carried out according to a predetermined program. After the washing and rinsing steps have been completed, centrifugal force is used to remove excess water by rotating the spin basket at high speeds. Uneven distribution of clothes in the spin basket during this spin cycle can cause abnormal vibration and noise and so a balancing device is required for the smooth operation of the drum washing machine.

Referring to Figure 4, the conventional drum washing machine includes a housing containing a tub 2 suspended by suspension springs 4a and shock absorbing members 4b. A spin basket 3 is mounted for rotation within the tub 2 by an electric motor 5 installed on the bottom of the housing 1, by means of a belt (not illustrated). The spin basket 3 has a plurality of small holes 3a uniformly formed in its surface, and a plurality of lifters 3b extend radially inwardly towards the axis of rotation of the spin basket.

Water is drained from the spin basket into the tub 2 through the small holes 3a, and the lifters 3b agitate the laundry and water created during the rotation of the spin basket 3, to thereby create suds and clean the clothes.

To prevent the generation of vibrations during the operation cycle, cast iron counterweights 6a,6b each of a predetermined weight, are attached to the front and upper cylindrical surface respectively of the tub 2 by bolts 7. The front counterweight 6a is generally in the region of 11.4kg and the upper counterweight 6b is generally in the region of 12.2kg.

A particular disadvantage with the conventional balancing device described above is that it only dampens rather than prevents vibration created by unevenly distributed laundry in the washing machine. Moreover, the conventional balancing device dampens the vibration transmitted to the tub 2 rather than the vibration of the spin basket itself and so is incapable of directly controlling the imbalance of the spin basket as soon as it occurs.

This problem was addressed in FR-A-1213067 which discloses movable counterweights in two circular conduits, one at each end of the drum.

The EPO cited EP-A-0781882, EP-A-0806516, EP-A-0808932 and EP-A-0806515 against the application, leading to the present patent, under Art. 54(3) EPC. These documents describe washing machines having two conduits, containing movable counterweights, at each end of the drum. However, they are, of course, of no interest when considering whether the present invention exhibits "inventive step" as defined in Art. 56 EPC.

It is known from EP 0808932 to provide a washing machine including: -
a drum for receiving a load of laundry having first and second end panels separated by a tubular side panel, the drum being mounted with its axis horizontal and for rotation about its axis;
a first circular conduit concentric with the drum and formed by a first groove in the first panel and a first groove in a plate member attached to the first panel;
a second circular conduit concentric with the first conduit, and formed by a second groove in the plate member and a second groove in the first panel; and
a plurality of counterweight elements located in each conduit for movement towards a counterbalancing position in response to an imbalance in a load in the drum,
wherein the depth of the first groove in the first panel does not equal the depth of the first groove in the plate member and the depth of the second groove in the first panel does not equal the depth of the second groove in the plate member.

According to the present invention, there is provided a washing machine in which the conduits are arranged such that substantially no net moment is applied to the first panel by said elements.

Preferably, a machine according to the present invention includes: -
a third circular conduit concentric with the drum and formed by a first groove in the second panel and a first groove in a further plate member attached to the second panel; and
a fourth circular conduit concentric with the third conduit, and formed by a second groove in the further plate member and a second groove in the second panel; and
a plurality of further counterweight elements located in the third and fourth conduits for movement towards a counterbalancing position in response to an imbalance in a load in the drum
wherein the depth of the first groove in the second panel does not equal the depth of the first groove in the further plate member and the the depth of the second groove in the second panel does not equal the depth of the second groove in the further plate member and the conduits are arranged such that substantially no net moment is applied to the second panel by said further elements.

Preferably, the counterweight elements are balls snugly received in the conduits.

Embodiments of the present invention will now be described, by way of example only, with reference to the accompanying drawings, in which:
Figure 1 is a sectional view of a drum washing machine with a balancing device in accordance with an embodiment of the present invention;
Figure 2 is an enlarged view of a part of the balancing device of Figure 1 in accordance with a first preferred embodiment of the present invention;
Figure 3 is an enlarged view of a part of a balancing device for a drum washing machine in accordance with a second preferred embodiment of the present invention; and
Figure 4 is a perspective view of the overall construction of a conventional drum washing machine.

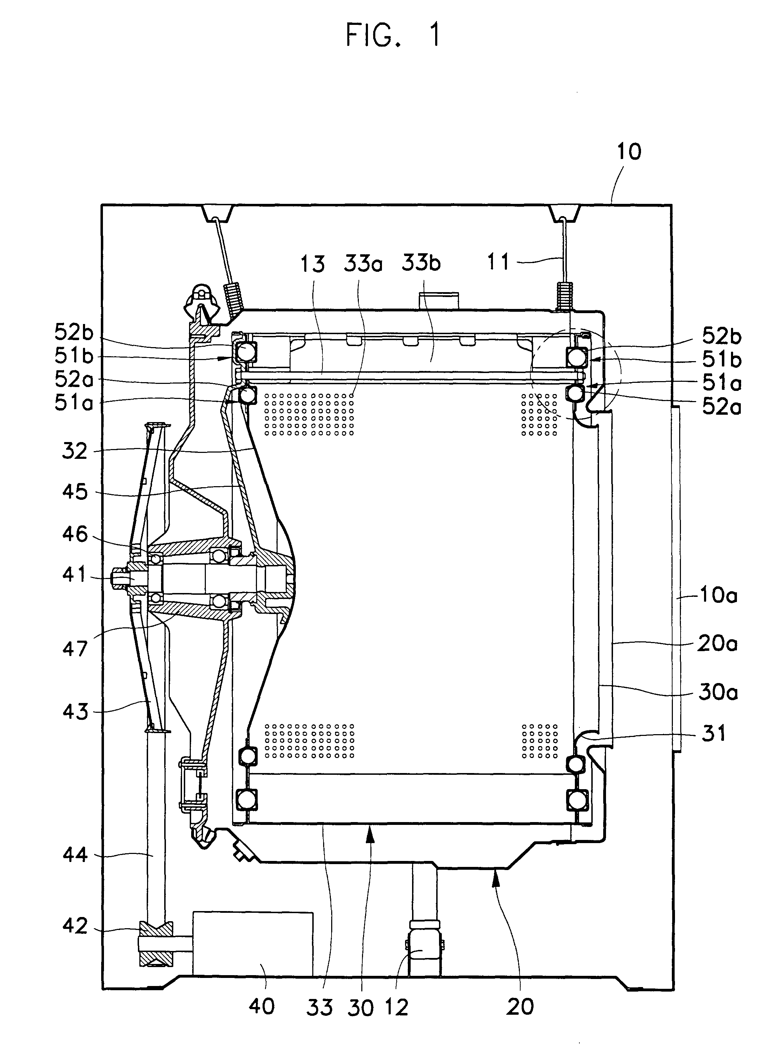

As shown in Figure 1, the drum washing machine of the preferred embodiment includes a housing 10 having a tub 20 suspended therein, a spin basket 30 mounted for rotation within the tub 20, and an electric motor 40 mounted beneath it to rotate the spin basket 30. The tub 20 is suspended by four springs 11 arranged on four sides of the housing 10, and a pair of shock absorbing arms 12 are provided beneath the tub 20.

The tub 20 and spin basket 30 are installed so that the axis of rotation of the spin basket is parallel to the ground and corresponding openings 10a, 20a and 30a are formed in the front of the housing 10, the front of the tub 20 and the front of the spin basket 30 respectively, so that laundry can be placed in or removed from the spin basket 30 through the tub 20 and housing 10.

The spin basket 30 has front and rear panel 31 and 32 separated by a cylindrically shaped side panel 33. A plurality of holes 33a are uniformly distributed in the side panel 33, and three lifters 33b which agitate the laundry during washing are formed on the side panel 33 and protrude radially inwardly in the form of a "V", each being spaced 120° from each other. The small holes 33a allow water to flow freely between the tub 20 and the spin basket 30.

The spin basket 30 is rotatably driven by the electric motor 40 through a horizontally supported shaft 41 which extends from the spin basket through the tub 20. A first pulley 42 is connected to the electric motor 40, and a second pulley 43 is connected to the shaft 41. A belt 44 is positioned between the first and second pulleys 42 and 43, and a flange 45 is provided in the rear panel 32 connected with the shaft 41 to provide room for a pair of bearings 46 installed in a bearing housing 47 between the shaft 41 and the tub 20 so as to support the shaft 41.

The spin basket 30 has a pair of balancing devices provided on both the front and rear panels 31 and 32 to counteract the vibration and imbalance created during rotation due to the uneven distribution of laundry in the spin basket 30. The balancing devices comprise annular-shaped races 51a and 51b concentrically arranged on inner and outer sides of the front and rear panels 31 and 32, and a plurality of balls 52a and 52b (which serve as counterweights) are respectively seated in the races 51a and 51b. The inner race 51a and the outer race 51b protrude inwardly and outwardly from their panels, respectively. The inner race 51a and the outer race 516 are welded to each other to form a seal. The races 51a and 51b contain a predetermined amount of oil to allow the balls 52a and 52b to move freely therein.

The races 51a and 51b are formed symmetrically in order to prevent deformation of the front and rear panels 31 and 32 during the rotation of the spin basket 30. That is, the moment created by one balancing device is offset by the moment created by the other balancing device to thereby preclude deformation of the front and rear panels 31 and 32. Because the races 51a and 51b have the same structure, only the races 51a and 51b provided on the front panel 31 will be described in detail.

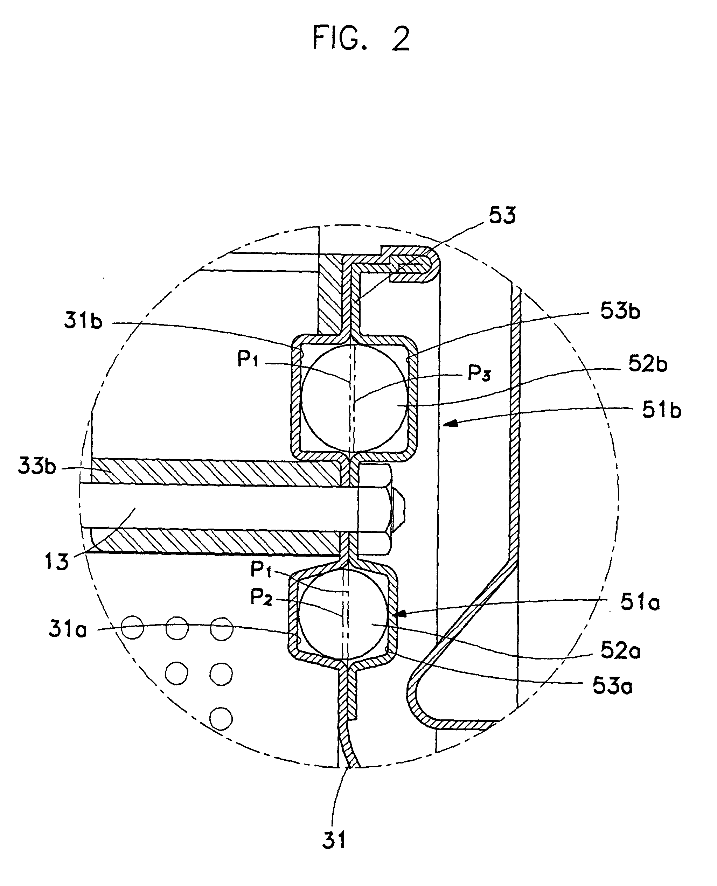

Figure 2 is an enlarged view of a part of the balancing device of Figure 1 in accordance with the first embodiment of the present invention. The races 51a and 51b are formed by a combination of inwardly extending grooves 31a and 31b formed on the front panel 31, and outwardly extending grooves 53a and 53b formed on a plate member 53 coupled to the front panel 31.

The depth of each inwardly extending groove 31a and 31b is similar to that of the respective outwardly extending grooves 53a and 53b so the races 51a and 51b protrude either side of the front panel 31 by a similar amount. With regard to the depths of the inward and outward grooves 31a, 31b and 53a, 53b, it is preferable that the joint P1 of the front panel 31 and the plate member 53 is arranged so that it is offset from a centre line P2 and P3 of the respective balls 52a and 52b so that the moving balls 52a and 52b do not ride in the groove created by the joint P1. It is more preferable that the outward groove 53b of the outer race 51b is deeper than its inward groove 31b whereas the inward groove 31a of the inner race 51a is deeper than its outward groove 53a so that the moment created by the inner race 51a is counterbalanced by the moment of the outer race 51b. However, the same effect can be achieved if the inward groove 31b of the outer race 51b is deeper than its outward groove 53b, whereas the outward groove 53a of the inner race 51a is deeper than its inward groove 31a. The plate member 53 is securely joined to the front and rear panels 31 and 32 by the bolt 13, as shown in Figure 1.

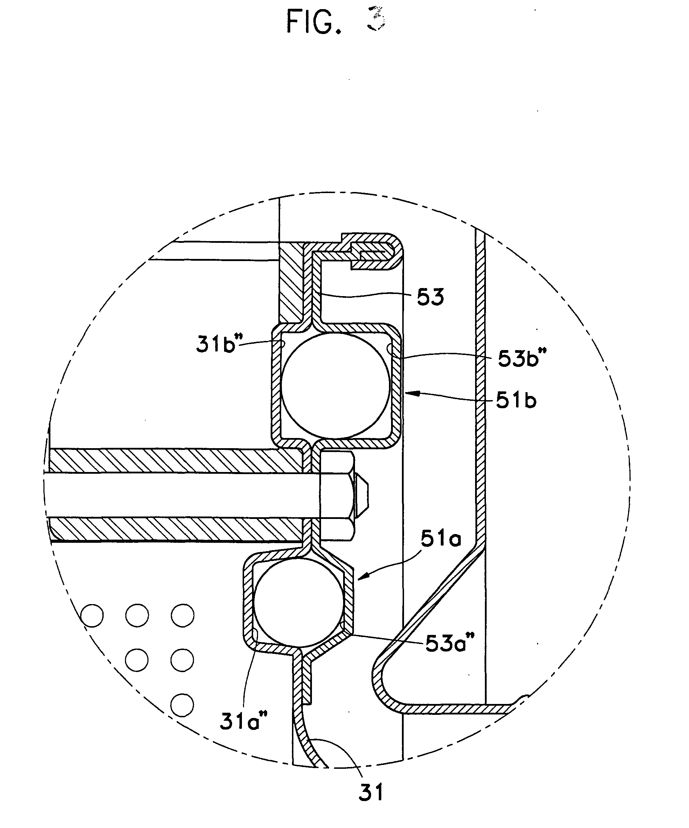

Figure 3 is an enlarged view of a part of a balancing device for a drum washing machine in accordance with a second embodiment of the present invention.

This embodiment overcomes the difficulty of injection-molding the races and when they are formed entirely of either an inwardly projecting groove 31a" or an outwardly projecting groove 53b".

The outer race 51b generally comprises the outward groove 53b" formed on the plate member 53, and the inward groove 31b" on the front panel 31. The inner race 51a is constituted of the inward groove 31a", formed on the front panel 31, and the outward groove 53a" on the plate member 53. Forming the races 51a, 51b in this manner provides for an easier injection-molding process.

The washing process carried out by the drum washing machine is now described.

When the electric motor 40 operates according to a prescribed program, the spin basket 30 rotates in a forward or reverse direction. The clothes contained in the spin basket are cleaned by the use of the suds generated by the rotation of the spin basket 30, aided by the action of the lifters 33b formed on the side panel 33 of the spin basket 30. Water is then removed from the laundry by centrifugal force by rotating the spin basket 30 at high speeds, and is drained into the tub 20 through the holes 33a formed on the side panel 33.

Vibration created by the uneven distribution of laundry in the spin basket 30 can be reduced by the following procedure.

The laundry is located on the bottom of the spin basket 30 in the initial stage of the spin drying process. As the spin basket 30 rotates at high speed, the balls 52a and 52b move to the opposite side of the imbalance along the corresponding races 51a and 51b by the centrifugal force created according to the high-speed rotation of the spin basket 30, to thereby compensate for the out-of-balance condition of the spin basket 30 and prevent vibration and eccentric rotation thereof.

More specifically, the spin basket 30 rotates eccentric from its geometric centre due to the laundry being unevenly distributed in the spin basket 30. The centrifugal force from the geometric centre and that of the centre of rotation of the spin basket simultaneously act on the balls 52a and 52b, seated in the races 51a and 51b so that the balls 52a and 52b relocate to a predetermined position to oppose the imbalance. The balls 52a and 52b turn about the geometric centre of the spin basket 30, thus making the spin basket 30's centre of rotation correspond to the geometric centre. This counteracts the unbalanced state of the spin basket 30, and thereby eliminates vibration and noise.

The mutual compensation of the moment produced by the balancing devices is now described.

In the balancing device of the preferred embodiment, the inwardly protruding part of the front panel 31 is similar in size to the outwardly protruding part of the rear panel 32, so the moment created by the inwardly protruding part negates the moment produced by the outwardly protruding part. Accordingly, the present invention prevents deformation of the front and rear panels 31 and 32.

As fully described above, the drum washing machine, equipped with the balancing device of the present invention, prevents the spin basket from abnormal rotation by dynamically counteracting imbalances that may occur as a result of the uneven arrangement of laundry therein, and eliminates vibration and noise created during rotation. The balancing device may also prevent unnecessary wear of the components used to support the rotation of the spin basket and abnormal noise created by friction.

The respective balancing devices are designed to be of the same volume and weight in order to offset the moment created by the inwardly protruding part of the front panel by the moment produced by the outwardly protruding part of the rear panel. Thus, the present invention prevents the deformation of the front and rear panels and the abnormal vibrations of the spin basket that may be created by the moment.

## Claims

1. A washing machine including: -
a drum (30) for receiving a load of laundry having first and second end panels (31,32) separated by a tubular side panel (33), the drum being mounted with its axis horizontal and for rotation about its axis;
a first circular conduit concentric with the drum (30) and formed by a first groove (31a') in the first panel and a first groove in a plate member attached to the first panel;
a second circular conduit concentric with the first conduit, and formed by a second groove (53b') in the plate member (53) and a second groove in the first panel; and
a plurality of counterweight elements located in each conduit for movement towards a counterbalancing position in response to an imbalance in a load in the drum,
wherein the depth of the first groove in the first panel does not equal the depth of the first groove in the plate member and the depth of the second groove in the first panel does not equal the depth of the second groove in the plate member and the conduits are arranged such that substantially no net moment is applied to the first panel by said counterweight elements.

2. A machine according to claim 1, including: -
a third circular conduit concentric with the drum and formed by a first groove in the second panel and a first groove in a further plate member attached to the second panel; and
a fourth circular conduit concentric with the third conduit, and formed by a second groove in the further plate member and a second groove in the second panel; and
a plurality of further counterweight elements located in the third and fourth conduits for movement towards a counterbalancing position in response to an imbalance in a load in the drum
wherein the depth of the first groove in the second panel does not equal the depth of the first groove in the further plate member and the depth of the second groove in the second panel does not equal the depth of the second groove in the further plate member and the conduits are arranged such that substantially no net moment is applied to the second panel by said further counterweight elements.

3. A machine according to any preceding claim, wherein the counterweight elements are balls snugly received in the conduits.

## Patentansprüche

1. Waschmaschine, die folgendes umfasst:
eine Trommel (30) zur Aufnahme einer Wäscheladung, die ein erstes und ein zweites Endwandteil (31, 32) aufweist, die durch ein röhrenförmiges Seitenwandteil (33) voneinander getrennt sind, wobei die Trommel mit ihrer Achse horizontal und zur Rotation um ihre Achse montiert ist;
einen ersten kreisförmigen Kanal, der konzentrisch zu der Trommel (30) verläuft und von einer ersten Nut (31a') im ersten Wandteil und einer ersten Nut in einem am ersten Wandteil befestigten Plattenelement gebildet wird;
einen zweiten kreisförmigen Kanal, der konzentrisch zu dem ersten Kanal ist und von einer zweiten Nut (53b') in dem Plattenelement (53) und einer zweiten Nut im ersten Wandteil gebildet wird; und
eine Mehrzahl von Gegengewichtselementen, die sich in jedem Kanal für eine Bewegung in Richtung auf eine Ausgleichsposition in Reaktion auf ein Ungleichgewicht in einer Last in der Trommel befindet,
wobei die Tiefe der ersten Nut im ersten Wandteil nicht gleich der Tiefe der ersten Nut in dem Plattenelement ist und die Tiefe der zweiten Nut im ersten Wandteil nicht gleich der Tiefe der zweiten Nut in dem Plattenelement ist, und wobei die Kanäle so angeordnet sind, dass im Wesentlichen kein Nettomoment von den genannten Gegengewichtselementen auf das erste Wandteil aufgebracht wird.

2. Maschine nach Anspruch 1, die folgendes umfasst:
einen dritten kreisförmigen Kanal, der konzentrisch zu der Trommel ist und von einer ersten Nut im zweiten Wandteil und einer ersten Nut in einem weiteren Plattenelement gebildet wird, das am zweiten Wandteil befestigt ist; und
einen vierten kreisförmigen Kanal, der konzentrisch zu dem dritten Kanal ist und von einer zweiten Nut in dem weiteren Plattenelement und einer zweiten Nut im zweiten Wandteil gebildet wird; und
eine Mehrzahl von weiteren Gegengewichtselementen, die sich in dem dritten und dem vierten Kanal für eine Bewegung in Richtung auf eine Ausgleichsposition in Reaktion auf ein Ungleichgewicht in einer Last in der Trommel befinden,
wobei die Tiefe der ersten Nut im zweiten Wandteil nicht gleich der Tiefe der ersten Nut in dem weiteren Plattenelement ist und die Tiefe der zweiten Nut im zweiten Wandteil nicht gleich der Tiefe der zweiten Nut in dem weiteren Plattenelement ist, und wobei die Kanäle so angeordnet sind, das im Wesentlichen kein Nettomoment von den genannten weiteren Gegengewichtselementen auf das zweite Wandteil aufgebracht wird.

3. Maschine nach einem der vorherigen Ansprüche, wobei die Gegengewichtselemente Kugeln sind, die satt in den Kanälen aufgenommen werden.

## Revendications

1. Une machine à laver comprenant : -
un tambour (30) pour recevoir une charge de linge, ayant un premier et un deuxième panneau d'extrémité (31,32) séparés par un panneau latéral tubulaire (33), le tambour étant monté avec son axe horizontal et pour tourner autour de son axe ;
un premier conduit circulaire concentrique avec le tambour (30) et formé par une première rainure (31a') dans le premier panneau et une première rainure dans un élément formant plaque attaché au premier panneau ;
un deuxième conduit concentrique avec le premier conduit, et formé par une deuxième rainure (53b') dans l'élément formant plaque (53) et une deuxième rainure dans le premier panneau ;
et
une pluralité d'éléments formant contrepoids placés dans chaque conduit pour un mouvement vers une position d'équilibrage en réponse à un déséquilibre d'une charge dans le tambour,
dans laquelle la profondeur de la première rainure dans le premier panneau n'est pas égale à la profondeur de la première rainure dans l'élément formant plaque, et la profondeur de la deuxième rainure dans le premier panneau n'est pas égale à la profondeur de la deuxième rainure dans l'élément formant plaque, et les conduits sont agencés de sorte qu'aucun moment net n'est sensiblement appliqué au premier panneau par lesdits éléments formant contrepoids.

2. Une machine à laver selon la revendication 1, comprenant :
un troisième conduit circulaire concentrique avec le tambour et formé par une première rainure dans le deuxième panneau et une première rainure dans un autre élément formant plaque attaché au deuxième panneau ; et
un quatrième conduit circulaire concentrique avec le tambour, et formé par une deuxième rainure dans l'autre élément formant plaque et une deuxième rainure dans le deuxième panneau ;
et
une pluralité d'autres éléments formant contrepoids placés dans les troisième et quatrième conduits pour un mouvement vers une position d'équilibrage en réponse à un-déséquilibre d'une charge dans le tambour
dans laquelle la profondeur de la première rainure dans le deuxième panneau n'est pas égale à la profondeur de la première rainure dans l'autre élément formant plaque, et la profondeur de la deuxième rainure dans le deuxième panneau n'est pas égale à la profondeur de la deuxième rainure dans l'autre élément formant plaque, et les conduits sont agencés de sorte qu'aucun moment net n'est sensiblement appliqué au deuxième panneau par lesdits autres éléments formant contrepoids.

3. Une machine à laver selon l'une quelconque des revendications précédentes, dans laquelle les éléments formant contrepoids sont des billes étroitement adaptées dans les conduits.
